# EUROPEAN PATENT SPECIFICATION

(11) **EP 1 058 577 B1**
(45) Date of publication and mention of the grant of the patent: **11.12.2002**
(21) Application number: 99905055.2
(22) Date of filing: 16.02.1999
(51) Int. Cl.: B01D 53/32, F01N 3/08, F01N 3/28

(54) **A COMPONENT FOR GAS TREATMENT**
GASBEHANDLUNGSKOMPONENTE
ELEMENT UTILISE POUR TRAITER DES GAZ

(30) Priority: 25.02.1998 GB 9803817
(43) Date of publication of application: 13.12.2000
(73) Proprietor: Accentus plc, Didcot, Oxfordshire OX11 0QJ (GB)
(72) Inventor: INMAN, Michael, Abingdon, Oxfordshire OX14 5NU (GB); ANDREWS, Peter James, Wantage, Oxfordshire OX12 9YE (GB); HALL, Stephen Ivor, Freeland, Oxford, Oxfordshire OX8 8AW (GB); MANSON-WHITTON, Christopher David John, Oxford, Oxfordshire OX2 0DA (GB); SHAWCROSS, James Timothy, Oxfordshire OX7 3TN (GB); WEEKS, David Michael, Abingdon, Oxfordshire OX13 5DB (GB)
(74) Representative: Lofting, Marcus John
(86) International application number: GB9900470
(87) International publication number: WO99043419

(56) References cited:
- WO-A-95/31270
- WO-A-98/02233
- GB-A- 2 274 412
- US-A- 3 620 703
- US-A- 4 767 309
- US-A- 5 009 763

## Description

The present invention relates to a component for the treatment of gases, and in particular to a component for exposing gas to a non-thermal plasma, desirably in the presence of a catalyst. More specifically, the invention relates to a component incorporated in a reactor for the reduction of polluting components such as carbonaceous and nitrogenous combustion products emitted in the exhaust of internal combustion engines.

One of the major problems associated with the development and use of internal combustion engines is the noxious exhaust emissions from such engines. Two of the most deleterious materials, particularly in the case of diesel engines, are particulate matter (primarily carbon) and oxides of nitrogen (NOₓ). Increasingly severe emission control regulations are forcing internal combustion engine and vehicle manufacturers to find more efficient ways of removing these materials in particular from internal combustion engine exhaust emissions. Unfortunately, in practice, it is found that combustion modification techniques which improve the situation in relation to one of the above components of internal combustion engine exhaust emissions tend to worsen the situation in relation to the other. Even so, a variety of systems for trapping particulate emissions from internal combustion engine exhausts have been investigated, particularly in relation to making such particulate emission traps capable of being regenerated when they have become saturated with particulate material.

Examples of such diesel exhaust particulate filters are to be found in European patent application EP 0 010 384; US patents 4,505,107; 4,485,622; 4,427,418; and 4,276,066; EP 0 244 061; EP 0 112 634 and EP 0 132 166.

In all the above cases, the particulate matter is removed from diesel exhaust gases by a simple physical trapping of particulate matter in the interstices of a porous, usually ceramic, filter body, which is then regenerated by heating the filter body to a temperature at which the trapped diesel exhaust particulates are burnt off. In most cases the filter body is monolithic, although EP 0 010 384 does mention the use of ceramic beads, wire meshes or metal screens as well. US patent 4,427,418 discloses the use of ceramic coated wire or ceramic fibres.

In a broader context, the precipitation of charged particulate matter by electrostatic forces also is known. However, in this case, precipitation usually takes place upon large planar electrodes or metal screens.

GB patent 2,274,412 discloses a method and apparatus for removing particulate and other pollutants from internal combustion engine exhaust gases, in which the exhaust gases are passed through a bed of charged pellets of material, preferably ferroelectric, having high dielectric constant. In addition to removing particulates by oxidation, especially electric discharge assisted oxidation, there is disclosed the reduction of NOₓ gases to nitrogen, by the use of pellets adapted to catalyse the NOₓ reduction.

The use of a reactor comprising a bed of beads of spherical, pellet, chip or other suitable form presents a problem, particularly for motor vehicles, in that the beads tend to wear or break up under the attrition to which they are subjected in use. Whilst monoliths of foam or honeycomb configuration can be adopted, we have found satisfactory formation of a non-thermal plasma is difficult to achieve with known forms of these configurations.

International application WO 98/02233 discloses an apparatus for the treatment of exhaust gas using a plasma, which comprises an electrode coated with a dielectric material at each end of a monolith having apertures extending therethrough in the flow direction.

It is an object of the present invention to provide a gas permeable component of dielectric material, which may be, or may be combined with, a catalytic material, for the treatment of gas, in a form which can be extruded or otherwise formed into a monolithic structure, and which will effectively support the formation of a non-thermal plasma when subjected to an electric potential.

The invention provides, in one of its aspects, a component for use in a gas treatment device, which component comprises dielectric material having apertures extending therethrough in a direction of gas flow through the component when in use, the apertures having a re-entrant configuration in cross-section and being such that there is interconnection through dielectric material of those regions of dielectric material which define opposite sides of the narrowest part of the apertures as measured in at least one direction transverse to the said direction of gas flow, and means for applying an electric potential across the component in the said transverse direction, or one of the said transverse directions, whereby the voltage drop across the said narrowest part of the apertures is greater than the voltage drop thereacross would be if the aperture were filled with the dielectric material.

For the purpose of providing the electric potential, a pair of electrodes is positioned one on one side and the other on the other side of the component so as to be spaced apart from one another in the said transverse direction, or one of the said transverse directions.

In one arrangement according to the invention, the apertures are shaped to provide interconnection through dielectric material of those regions of dielectric material which define opposite sides of the narrowest part of the apertures as measured in two mutually orthogonal directions transverse to the said direction of gas flow, a first pair of electrodes is positioned one on one side and the other on the other side of the component so as to be spaced apart from one another in one said transverse direction, and a second pair of electrodes is positioned one on one side and the other on the other side of the component so as to be spaced apart from one another in the other, orthogonal, transverse direction.

In an alternative arrangement embodying the invention, the said means for applying an electric potential comprise wires(41,42) extending through the dielectric material(13,13a;16,17;16a,17a).

The apertures are such as to promote formation of a non-thermal plasma therein when the component is in use and an electric potential is applied. For this purpose, for example, each aperture is shaped in cross-section to taper on both or all sides towards the said narrowest part of the aperture, thereby to encourage transfer of electrical discharge from the said narrowest part into the tapered parts of the apertures.

Preferably the dielectric material is chosen to have in the presence of an electrical discharge a catalytic action in the reduction of nitrogenous oxides.

Preferably the dielectric material is a barium titanate containing material.

The invention provides, in another of its aspects, a reactor for reducing pollution from exhaust emissions from an internal combustion engine, comprising a reactor chamber adapted to form part of an internal combustion engine exhaust system, the reactor chamber including a component as aforesaid, through which component exhaust gases are constrained to pass.

Specific constructions of component and reactor embodying the invention will now be described by way of example and with reference to the drawings filed herewith, in which:
Figure 1 is a perspective view of part of a component,
Figure 2 is a perspective view of part of another component,
Figures 3, and 4, are diagrammatic representations of alternative cross-sectional shapes for the component,
Figure 5 is a diagrammatical representation of a reactor incorporating a component according to the invention,
Figure 6 shows a modification of the component of Figure 2, and
Figures 7 to 9 show further variants of the modification shown in Figure 6.

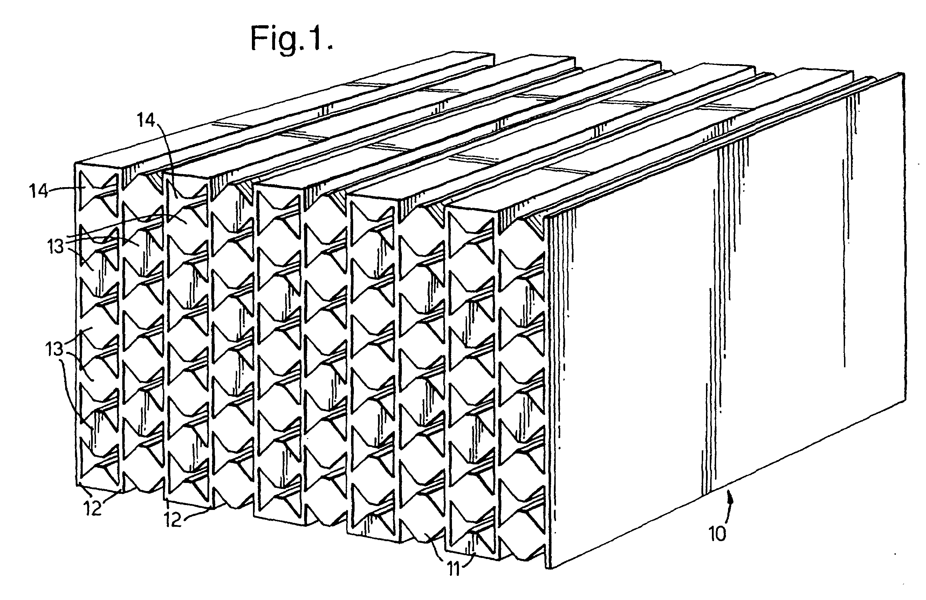

Figure 1 shows a component 10 which can be formed by extrusion from a dielectric material 11. Our preferred material is one containing barium titanate which, for extrusion purposes, may be fabricated from a barium titanate powder together with a binder of for example alumina, silica or titania or a combination of these, for example a combination of silica and titania.

As may be seen from Figure 1, the extrusion has the form of a series of parallel plates 12 between which, and integral with which, is a matrix of rods 13 of generally rhombus shape in cross-section extending parallel with one another between the plates 12 along the length of the component 10.

The series of rods 13 between each pair of plates 12 provides a corresponding series of apertures 14 extending along the length of the component 10 and having a shape in cross-section like that of a stylised bow tie.

Electrodes (not shown) positioned on the respective two sides of the component 10 perpendicular to the plane of the plates 12 enable an electric potential to be applied to the component in a direction parallel with the plates 12 and transverse to the length of the apertures 14.

The re-entrant shape of the apertures 14 in cross-section has the effect that voltage drop derived from the charged dielectric material is concentrated in the region where the space between one rod 13 and its adjacent rod is narrowest. This configuration has the effect of promoting the formation of non-thermal plasma in these narrow spaces. However, it is a feature of plasma formed in this way that it tends to expand and travel along outwardly tapering spaces which communicate with the narrow space where plasma tends to be initiated. The shape of the apertures 14 is thus conducive to the formation of plasma which fills the entire void space of the component 10.

A feature of the configuration shown in Figure 1 is that the plates 12 provide a continuous dielectric path between the electrodes and between each such path there is a series of discharge gaps provided by the narrowest part of the apertures 14, the discharge gaps being aligned to be parallel with the electric field set up between the electrodes.

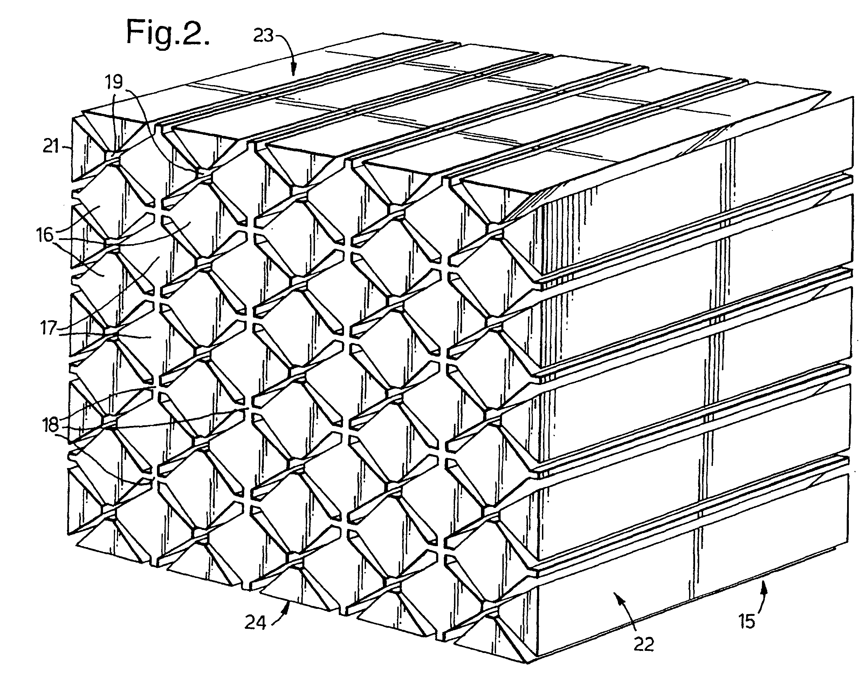

Figure 2 illustrates another configuration in which component 15 can be formed by extrusion. Again, the configuration is based upon an array of generally rhombus shaped rods 16,17. Alternate rows and columns of the rods 16, 17 are joined at their apices by cruciform regions 18. The intervening rows and columns provide a series of discharge gaps 19. The rods 16, 17 are so shaped that the narrow spaces between adjacent rods which communicate with the discharge gaps 19 are tapered, with the narrowest region of the taper at the gaps 19. As explained above, this promotes the transfer of plasma formed in the discharge gaps 19 along the tapered spaces. It will be seen that adjacent each aligned row of discharge gaps 19 is an aligned row of interconnected rods 16. Similarly, adjacent to each aligned column of discharge gaps 19 is an aligned column of interconnected rods 17.

Electrodes (not shown) covering respectively the sides 21 and 22 of the component 15 enable an electrical potential to be applied across the component 15. By virtue of the juxtaposition of interconnected rods 16 in one row and cross connected rods 17 with intervening discharge gaps 19 in the adjacent row, application of an appropriate electrical potential in this way leads to the generation of plasma discharge in the gaps 19 and expansion of the plasma into the tapering spaces to fill the entire void structure of the component 15.

It will be apparent from the symmetry of the component shown in Figure 2, that electrodes (not shown) may be positioned to cover the sides 23 and 24 respectively so as to enable an electrical potential to be applied parallel with the columns of rods 16, 17. Provided there is an appropriate insulating gap between electrodes on the adjacent sides which may at any instant be at a different potential, electrical excitation may be applied to all four sides.

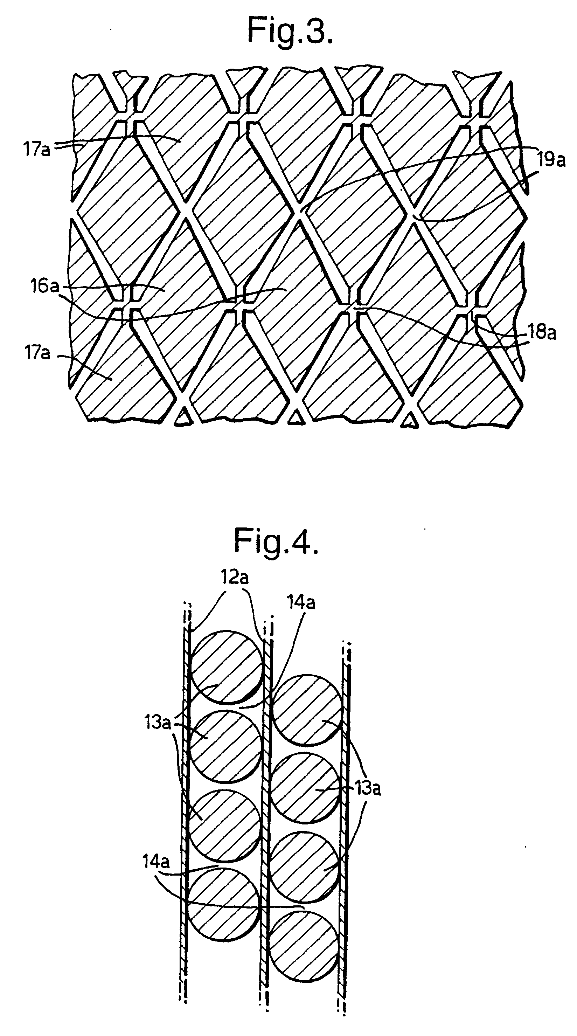

It will be appreciated that controlled arrays of discharge gaps between regions of dielectric material interconnected to concentrate potential drop across the discharge gaps can be achieved with a variety of different configurations of extruded matrix. Figure 3 shows a variant of the Figure 2 configuration, similar components bearing the same reference numerals distinguished by the suffix "a". Figure 4 shows a variant of the Figure 1 configuration, based upon cylindrical rods. The reference numerals used in Figure 4 correspond with those of Figure 1, distinguished by the suffix "a".

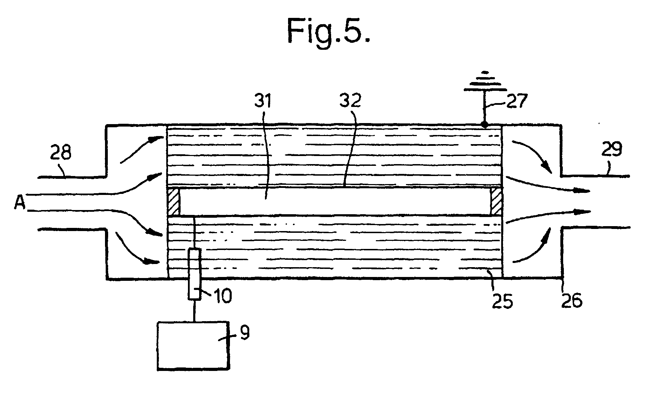

Figure 5 shows diagrammatically in cross-section a component 25 comprising an extruded monolith having a configuration (chosen as discussed further below) as shown in one of the Figures 1 to 4 and incorporated in a plasma reactor for the purification of internal combustion engine exhaust emissions.

The component 25 is mounted within a cylindrical stainless steel chamber 26 which is arranged to be connected to an earthing point at 27 and which has an inlet nozzle 28 by means of which it can be connected to the exhaust system of an internal combustion engine, and a similar outlet nozzle 29. Exhaust gas flows as indicated by the arrows A axially through the apertures of the component 25.

Because of the cylindrical geometry, it is necessary for the extruded monolith component 25 to have a symmetrical configuration such as that of Figure 2 cut or shaped into a cylinder with an axial bore 31. The axial bore 31 is closed at each end to ensure all gas flow is through the apertures of the monolith component 25. An outer electrode is provided either by the chamber 26 itself or by a cylindrical metallic sheath on the component 25 and in electrical contact with the chamber 26. An inner electrode 32 is provided in the form of a cylindrical lining for the bore 31. The electrode 32 is connected via a high tension lead-through 10 to a source 9 of electrical potential sufficient to excite a plasma in the exhaust gases in the void spaces within the component 25. A convenient potential for this purpose is a potential of about 10 kV to 30 kV, which may be a pulsed direct potential or a continuously varying alternating potential, or may be an interrupted continuous direct potential. Typically we employ a potential of 20 kV per 30 mm of bed depth.

In a modified arrangement, in which any of the configurations of Figure 1,2,3,or 4 may be employed, the chamber 26 and component 25 are rectangular in cross section. For this configuration, it is not necessary to have a central bore corresponding to the bore 31. Electrodes may be positioned on opposed sides of the component 25, but in this case it is necessary to provide electrical insulation between the high voltage electrode and the chamber 26. For this reason, it may be preferable to provide the high voltage electrode as a sheet positioned centrally within the component 25.

The material of the component 25 is chosen in order to meet the requirements of formation by extrusion, and the dielectric and catalytic properties for the purpose of reducing pollutants from internal combustion engine exhaust gases. The material is preferably a ferroelectric material such as barium titanate or calcium titanate which, for extrusion, will need to be prepared in powder form into which a binder material is incorporated. Gamma alumina, silica or titania or a combination of these may serve as a binder, although a preferred binder is a combination of silica and titania which may be derived from a silica-titania gel. The ferroelectric material may be mixed with a dielectric material such as zirconia or titania, or zeolite for example metal exchanged zeolite or proton exchanged zeolite for example Cu-exchanged ZSM-5 or H-exchanged ZSM-5 or, for some applications, it may be appropriate to use dielectric material alone or mixtures of dielectric materials. Where titania is used, it is advantageous to use the anatase phase in order to benefit from the photocatalytic properties of the material in this form. Other materials such as alumina or a perovskite may be incorporated for the catalytic properties which they impart to the product matrix.

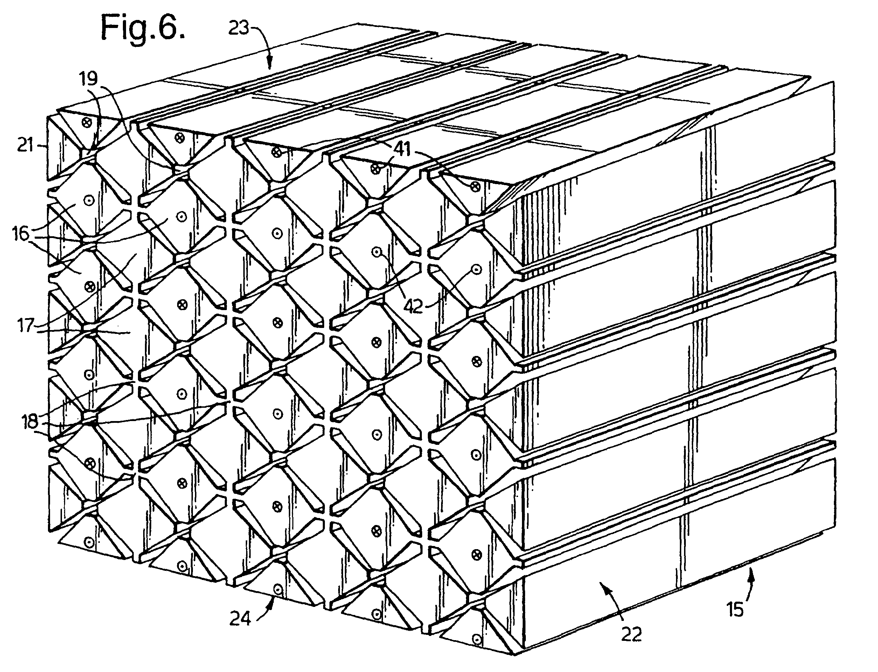

Figure 6 shows a modification of the component of Figure 2 in which a number of the rods 16 are formed with an electrically conducting wire extending through the centre of the rod as indicated diagrammatically on the Figure at 41,42.

With such an arrangement it is possible to apply an electric field across the gaps 19 in a more individually controlled manner. Referring to Figure 6 the wires represented at 41 marked with a cross are connected to one pole of the voltage power supply (for example the positive pole) whilst those wires represented at 42 with a central dot are connected to the other pole (for example the negative pole). With such a configuration, the electric field established across the gaps 19 will be in a direction substantially parallel with the sides 21 and 22 of component.

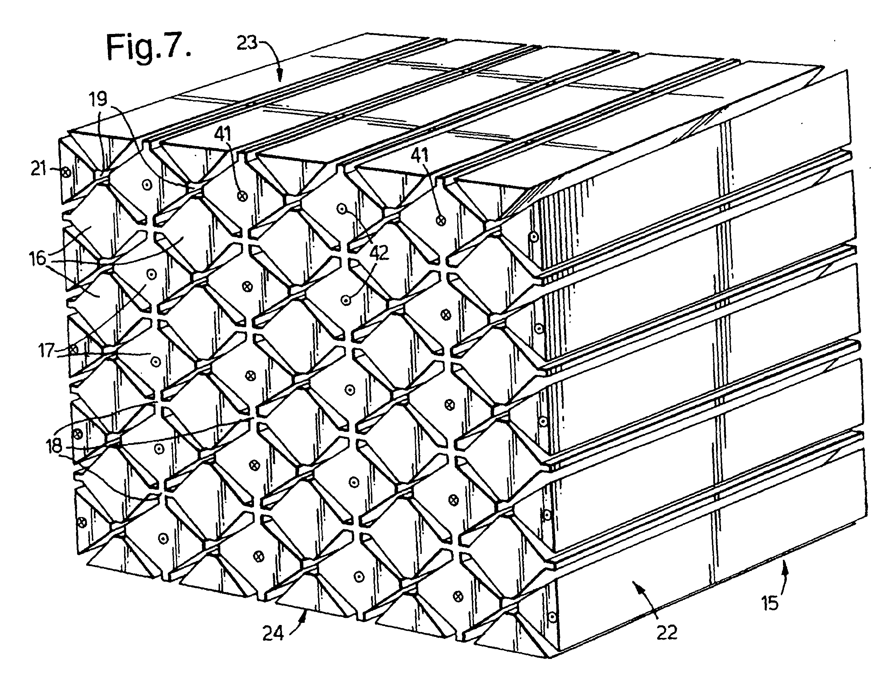

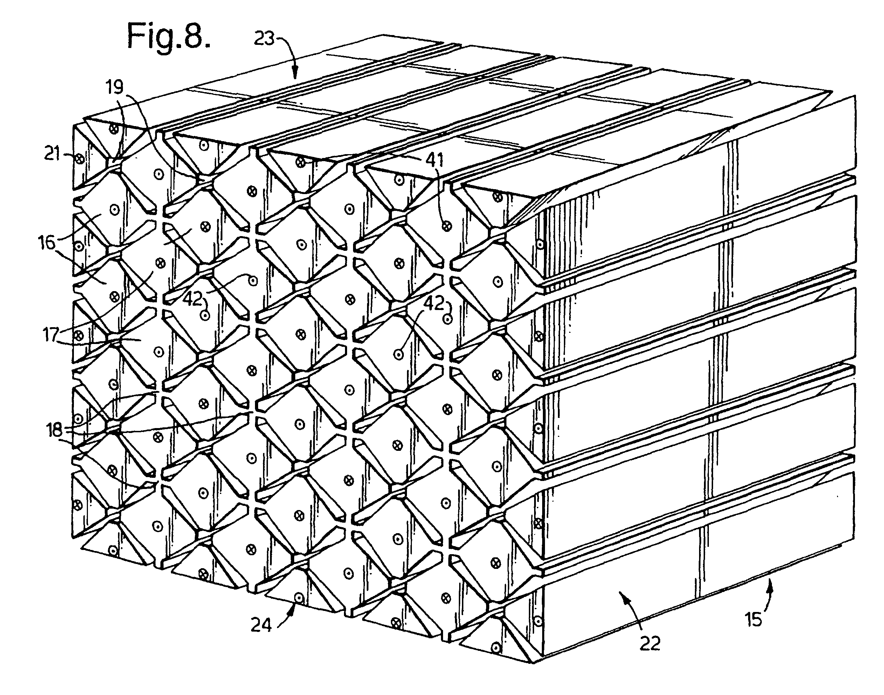

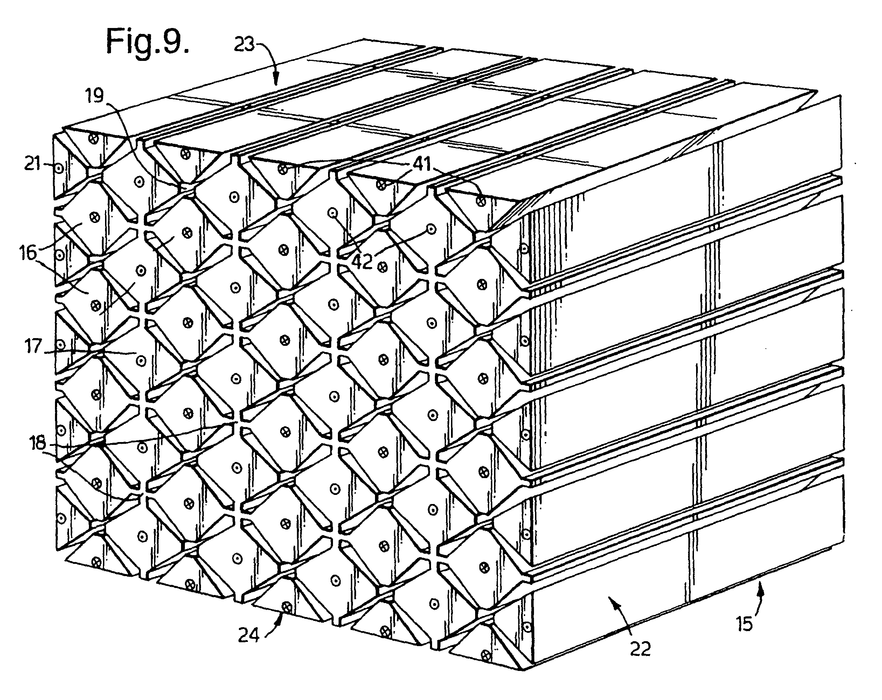

It will be appreciated that a variety of different configurations of the positive and negative connections are possible. Figure 7 shows a variant equivalent to that of Figure 6 turned through 90 degrees, i.e. so that the electric field in the gaps 19 extends in a direction substantially parallel with the sides 23 and 24 of the component. Figure 8 shows a variant in which the electric field in the gaps 19 will have components both parallel to the sides 23, 24 and to the sides 21, 22. Figure 9 shows the variant in which the electric field in the gaps 19 will extend in a diagonal direction.

Connection of such a multiplicity of electrodes to the power supply is evidently less straightforward than the use of simple plate electrodes positioned on opposite sides of the component. However, connection may be made via a suitably shaped electrically conducting grids providing connection at one end of the component to the wires 41 which are to be positive and at the other end of the component to the wires 42 which are to be negative.

The voltage to be applied across the wires in these examples will be significantly less than that required across electrode plates which are spaced apart by the entire width of the component. A typical voltage required is likely to be of the order of 3 kV or 4 kV, but the value required would have to be determined in the light of operational experience to be such as to avoid failure due to operating beyond the dielectric breakdown voltage of the material whilst being sufficient to create the desired non-thermal plasma in the gaps 19.

## Claims

1. A component for use in a gas treatment device, which component comprises dielectric material (12,13; 12a,13a; 16,17; 16a,17a) having apertures(14; 14a;19; 19a) extending therethrough in a direction of gas flow through the component when in use, **characterised by** the combination of features that the apertures(14; 14a; 19; 19a) have a re-entrant configuration in cross-section and are such that there is interconnection through dielectric material of those regions of dielectric material which define opposite sides of the narrowest part of the apertures(14; 14a; 19; 19a) as measured in at least one direction transverse to the said direction of gas flow, and means is provided for applying an electric potential across at least part of the component in the said transverse direction, or one of the said transverse directions, whereby the voltage drop across the said narrowest part of the apertures (14; 14a; 19; 19a) is greater than the voltage drop thereacross would be if the aperture were filled with the dielectric material.

2. A component as claimed in claim 1, further **characterised in that** the said means for applying an electric potential comprise a pair of electrodes positioned one on one side and the other on the other side of the component so as to be spaced apart from one another in the said transverse direction, or one of the said transverse directions.

3. A component as claimed in claim 1, further **characterised in that** the apertures (14; 14a; 19; 19a) are shaped to provide interconnection through dielectric material of those regions of dielectric material which define the opposite sides of the narrowest part of the apertures(14;14a;19;19a) as measured in two mutually orthogonal directions transverse to the said direction of gas flow, a first pair of electrodes is positioned one on one side and the other on the other side of the component so as to be spaced apart from one another in one said transverse direction, and a second pair of electrodes is positioned one on one side and the other on the other side of the component so as to be spaced apart from one another in the other, orthogonal, transverse direction.

4. A component as claimed in claim 1, further **characterised in that** the said means for applying an electric potential comprise wires (41,42) extending through the dielectric material (13,13a; 16,17; 16a,17a).

5. A component as claimed in any of the preceding claims, further **characterised in that** each aperture (14; 14a; 19; 19a) is shaped in cross-section to taper on both or all sides towards the said narrowest part of the aperture, thereby to encourage transfer of electrical discharge from the said narrowest part into the tapered parts of the apertures.

6. A component as claimed in any of the preceding claims, further **characterised in that** the dielectric material is chosen to have in the presence of an electrical discharge a catalytic action in the reduction of nitrogenous oxides.

7. A component as claimed in any of the preceding claims, further **characterised in that** the dielectric material is a barium titanate containing material.

8. A reactor for reducing pollution from exhaust emissions from an internal combustion engine, comprising a reactor chamber (26) adapted to form part of an internal combustion engine exhaust system, **characterised in that** the reactor chamber (26) includes a component (25) as claimed in any of the preceding claims, through which component (25) exhaust gases are constrained to pass.

## Patentansprüche

1. Bauteil für die Verwendung in einer Gasbehandlungsvorrichtung, wobei das Bauteil einen dielektrischen Werkstoff (12, 13; 12a, 13a; 16, 17; 16a, 17a) mit Öffnungen (14; 14a; 19; 19a), die durch ihn in einer Richtung verlaufen, in der das Gas durch das Bauteil strömt, wenn es in Gebrauch ist, umfasst, **gekennzeichnet durch** die Kombination der Merkmale, dass die Öffnungen (14; 14a; 19; 19a) eine im Querschnitt in sich geschlossene Konfiguration besitzen und so beschaffen sind, dass diejenigen Bereiche aus dielektrischem Werkstoff, die gegenüberliegende Seiten des schmalsten Teils der Öffnungen (14; 14a; 19; 19a), gemessen in wenigstens in einer Richtung quer zu der Gasströmungsrichtung, definieren, **durch** den dielektrischen Werkstoff miteinander verbunden sind, und dass Mittel vorgesehen sind, die ein elektrisches Potenzial wenigstens über einen Teil des Bauteils in dieser Querrichtung oder in einer dieser Querrichtungen anlegen, wobei der Spannungsabfall über dem schmalsten Teil der Öffnungen (14; 14a; 19; 19a) größer ist als er wäre, wenn die Öffnung mit dem dielektrischen Werkstoff gefüllt wäre.

2. Bauteil nach Anspruch 1, ferner **dadurch gekennzeichnet, dass** die Mittel zum Anlegen eines elektrischen Potenzials ein Paar Elektroden umfassen, die auf der einen bzw. der anderen Seite des Bauteils angeordnet sind und somit voneinander in der Querrichtung oder in einer der Querrichtungen beabstandet sind.

3. Bauteil nach Anspruch 1, ferner **dadurch gekennzeichnet, dass** die Öffnungen (14; 14a; 19; 19a) so geformt sind, dass diejenigen Bereiche aus dielektrischem Werkstoff, die die gegenüberliegenden Seiten des schmalsten Teils der Öffnungen (14; 14a; 19; 19a), gemessen in zwei zueinander senkrechten Richtungen quer zu der Gasströmungsrichtung, definieren, durch den dielektrischen Werkstoff miteinander verbunden sind, ein erstes Paar Elektroden auf der einen Seite bzw. der anderen Seite des Bauteils so angeordnet ist, dass sie voneinander in einer der Querrichtungen beabstandet sind, und ein zweites Paar Elektroden auf der einen Seite bzw. der anderen Seite des Bauteils so angeordnet ist, dass sie voneinander in der anderen, hierzu senkrechten Querrichtung beabstandet sind.

4. Bauteil nach Anspruch 1, ferner **dadurch gekennzeichnet, dass** die Mittel zum Anlegen eines elektrischen Potenzials Drähte (41, 42) umfassen, die durch den dielektrischen Werkstoff (13, 13a; 16, 17; 16a, 17a) verlaufen.

5. Bauteil nach einem der vorhergehenden Ansprüche, ferner **dadurch gekennzeichnet, dass** jede Öffnung (14; 14a; 19; 19a) im Querschnitt so geformt ist, dass sie auf beiden oder auf allen Seiten zu dem schmalsten Teil der Öffnung konisch verläuft, wodurch die Verlagerung der elektrischen Entladung von dem schmalsten Teil in die konisch verlaufenden Teile der Öffnung gefördert wird.

6. Bauteil nach einem der vorhergehenden Ansprüche, ferner **dadurch gekennzeichnet, dass** der dielektrische Werkstoff so gewählt ist, dass er bei der Reduktion von Stickoxiden in Gegenwart einer elektrischen Entladung eine katalytische Wirkung hat.

7. Bauteil nach einem der vorhergehenden Ansprüche, ferner **dadurch gekennzeichnet, dass** der dielektrische Werkstoff ein Werkstoff ist, der Bariumtitanat enthält.

8. Reaktor zur Reduktion von Schadstoffen von Abgasemissionen von einer Brennkraftmaschine, der eine Reaktorkammer (26) umfasst, die so beschaffen ist, dass sie einen Teil eines Brennkraftmaschinen-Abgassystems bildet, **dadurch gekennzeichnet, dass** die Reaktorkammer (26) ein Bauteil (25), wie in einem der vorhergehenden Ansprüche beansprucht, durch das Abgase gezwungen werden, umfasst.

## Revendications

1. Un composant à utiliser dans un dispositif de traitement des gaz, lequel composant comprend un matériau diélectrique (12, 13 ; 12a, 13a ; 16, 17 ; 16a, 17a) ayant des ouvertures (14 ; 14a ; 19 ; 19a) se prolongeant dans celui-ci selon une direction de flux de gaz dans le composant lorsqu'il est en service, **caractérisé par** la combinaison de propriétés selon lesquelles les ouvertures (14 ; 14a ; 19 ; 19a) ont une configuration rentrante en coupe et sont telles qu'il existe une interconnexion dans le matériaux diélectrique de ces régions du matériau diélectrique qui définissent les côtés opposés de la partie la plus étroite des ouvertures (14 ; 14a ; 19 ; 19a) telle que mesurée dans au moins une direction transversale par rapport à ladite direction du flux de gaz, et un moyen est fourni afin d'appliquer un potentiel électrique à au moins une partie du composant selon ladite direction transversale ou l'une desdites directions transversales, moyennant quoi la chute de potentiel au niveau de ladite partie la plus étroite des ouvertures (14 ; 14a ; 19 ; 19a) est supérieure à ce que la chute de potentiel à ce niveau serait si l'ouverture était remplie du matériau diélectrique.

2. Un composant selon la revendication 1, encore **caractérisé en ce que** ledit moyen d'appliquer un potentiel électrique comprend une paire d'électrodes positionnées l'une d'un côté et l'autre de l'autre côté du composant de façon à être espacées l'une de l'autre selon ladite direction transversale ou l'une desdites directions transversales.

3. Un composant selon la revendication 1, encore **caractérisé en ce que** les ouvertures (14 ; 14a ; 19 ; 19a) sont formées afin d'offrir une interconnexion dans le matériau diélectrique de ces régions du matériau diélectrique qui définissent les côtés opposés de la partie la plus étroite des ouvertures (14 ; 14a ; 19 ; 19a) telle que mesurée selon deux directions mutuellement orthogonales transversales par rapport à ladite direction du flux de gaz, une première paire d'électrodes est positionnée l'une d'un côté et l'autre de l'autre côté du composant de façon à être espacées l'une de l'autre selon ladite direction transversale, et une deuxième paire d'électrodes est positionnée l'une d'un côté et l'autre de l'autre côté du composant de manière à être espacées l'une de l'autre selon l'autre direction transversale orthogonale.

4. Un composant selon la revendication 1, encore **caractérisé en ce que** ledit moyen d'appliquer un potentiel électrique comprend des fils (41, 42) qui passent dans le matériau diélectrique (13, 13a ; 16, 17 ; 16a, 17a).

5. Un composant selon l'une quelconque des revendications précédentes, encore **caractérisé en ce que** chaque ouverture (14 ; 14a ; 19 ; 19a) est formée en coupe afin de terminer en pointe des deux ou de tous les côtés vers la partie la plus étroite de l'ouverture, afin de favoriser ainsi le transfert des décharges électriques de ladite partie la plus étroite dans les parties en pointe des ouvertures.

6. Un composant selon l'une quelconque des revendications précédentes, encore **caractérisé en ce que** le matériau diélectrique est choisi afin d'avoir, en présence d'une décharge électrique, une action catalytique dans la réduction d'oxydes d'azote.

7. Un composant selon l'une quelconque des revendications précédentes, encore **caractérisé en ce que** le matériau diélectrique est un matériau contenant du titanate de baryum.

8. Un réacteur pour réduire la pollution par les émissions d'échappement d'un moteur à combustion interne, comprenant une chambre de réacteur (26) adaptée pour faire partie d'un système d'échappement d'un moteur à combustion interne, **caractérisé en ce que** la chambre de réacteur (26) comprend un composant (25) selon l'une quelconque des revendications précédentes, dans lequel composant (25) on oblige les gaz d'échappement à passer.
